# DEMANDE DE BREVET EUROPEEN

(11) **EP 4 789 939 A1**
(43) Date de publication de la demande: **12.08.2026**
(21) Numéro de dépôt: 26157008.9
(22) Date de dépôt: 06.02.2026
(51) Int. Cl.: B60W 30/09, B60W 30/095, B60W 40/08, B60W 40/09, B60W 50/14

(54) **PROCÉDÉ D'AIDE À LA CONDUITE D'UN VÉHICULE AUTOMOBILE**

(30) Priorité: 06.02.2025 FR 2501228
(71) Demandeur: AMPERE s.a.s., 92100 Boulougne-Billancourt (FR)
(72) Inventeur: GAUTHEREAU, Didier, 78280 GUYANCOURT (FR)
(74) Mandataire: Renault Group

(57) **Abrégé**

Procédé d'aide à la conduite, comprenant,
- une étape (E1) de capture d'une succession d'images du conducteur, par une caméra disposée dans l'habitacle,
- une étape (E2) de détection d'une situation à risque de collision dans une zone donnée de l'environnement du véhicule,
- une étape (E3) de détermination d'une adaptation ou non d'un comportement du conducteur à la situation à risque,
- puis,
(i) si le comportement du conducteur est inadapté, une première étape (E4) de gestion comprenant une activation d'un moyen d'alerte du conducteur selon un premier niveau de criticité et/ou à un premier instant d'alerte, ou
(i) sinon, une cinquième étape (ES) de gestion comprenant une activation du moyen d'alerte selon un deuxième niveau de criticité strictement inférieur au premier niveau de criticité et/ou à un deuxième instant d'alerte strictement postérieur au premier instant d'alerte.

## Description

L'invention concerne un procédé d'aide à la conduite d'un véhicule automobile. L'invention porte encore sur un dispositif d'aide à la conduite d'un véhicule automobile. L'invention porte également sur un programme d'ordinateur mettant en œuvre le procédé mentionné. L'invention porte enfin sur un support d'enregistrement sur lequel est enregistré un tel programme.

Les véhicules automobiles sont fréquemment équipés de dispositifs d'aide à la conduite comprenant des fonctions d'avertissement de collisions potentielles ou d'actions anticollision.

Ces dispositifs déterminent la criticité d'une situation de conduite en combinant des données issues de capteurs (notamment des radars, lidars, cameras) et les données relatives au véhicule concerné (notamment une position, une vitesse, une accélération du véhicule). Selon la criticité estimée, les dispositifs peuvent déclencher un avertissement sonore ou une intervention d'un système d'aide à la conduite pour faciliter l'évitement d'une collision, une sortie de voie...

Toutefois, les dispositifs d'aide à la conduite existants présentent des inconvénients. Notamment, ils peuvent générer des « faux positifs », c'est-à-dire se déclencher alors que le conducteur a déjà détecté la situation et tente de la résoudre. Une telle situation est dérangeante et possiblement anxiogène pour les occupants du véhicule.

Le but de l'invention est de fournir un procédé et un dispositif d'aide à la conduite d'un véhicule automobile remédiant aux inconvénients ci-dessus et améliorant les procédés et dispositifs d'aide à la conduite connus de l'art antérieur. En particulier, l'invention permet de réaliser un procédé qui soit simple et fiable et qui permette de réduire un taux de faux positifs parmi les alertes émises par le procédé d'aide à la conduite.

A cet effet, l'invention porte sur un procédé d'aide à la conduite d'un véhicule automobile, le véhicule automobile comprenant,
- au moins un capteur d'images disposé dans un habitacle du véhicule automobile,
- un module de construction d'une représentation d'un environnement de circulation du véhicule automobile,
- un moyen d'alerte d'un conducteur du véhicule automobile, et
le procédé comprenant :
- une première étape de capture, par l'au moins un capteur d'images, d'une succession d'images du conducteur,
- une deuxième étape de détection, à un premier instant, d'une situation à risque de collision dans une zone donnée de l'environnement, à partir d'une représentation de l'environnement de circulation du véhicule automobile déterminée par le module de construction, puis
- une troisième étape de détermination, à partir de la succession d'images, d'une adaptation ou non d'un comportement du conducteur à la situation à risque de collision,
- puis,
   (i) en cas d'une inadaptation d'un comportement du conducteur à la situation à risque de collision, une quatrième étape de gestion de la situation à risque de collision selon un premier mode comprenant une activation du moyen d'alerte selon un premier niveau de criticité d'une alerte et/ou à un premier instant d'alerte, ou
   (ii) en cas d'une adaptation d'un comportement du conducteur à la situation à risque de collision, une cinquième étape de gestion de la situation à risque de collision selon un deuxième mode comprenant une activation du moyen d'alerte selon un deuxième niveau de criticité de l'alerte strictement inférieur au premier niveau de criticité de l'alerte et/ou à un deuxième instant d'alerte strictement postérieur au premier instant d'alerte.

Dans un mode de réalisation, le véhicule automobile comprend en outre un système d'alerte de collision frontale et/ou un système d'avertissement d'angle mort,
et la quatrième étape et/ou la cinquième étape de gestion de la situation à risque de collision comprend une mise en œuvre du système d'alerte de collision frontale et/ou une mise en œuvre du système d'avertissement d'angle mort.

Dans un mode de réalisation, la première étape de capture comprend une détection d'une orientation des yeux et de la tête du conducteur, et la troisième étape de détermination comprend une analyse d'une succession de directions d'un regard du conducteur capturées par l'au moins un capteur d'images, de sorte à estimer si au moins un ensemble de regards du conducteur sont dirigés directement ou indirectement vers la zone donnée, y compris par l'intermédiaire d'un rétroviseur du véhicule automobile, le nombre de regards de l'ensemble étant strictement supérieur à 1.

Dans un mode de réalisation, la troisième étape de détermination comprend une analyse des actions effectuées par un conducteur du véhicule automobile, comprenant une utilisation d'indicateurs de changements de voie et/ou un appui sur une pédale de frein ou d'accélérateur du véhicule automobile et/ou une modification d'un angle volant du véhicule automobile.

Dans un mode de réalisation, la quatrième étape de gestion de la situation à risque selon le premier mode comprend en outre un déclenchement immédiat d'au moins une action du véhicule automobile sans intervention du conducteur, et/ou la cinquième étape de gestion de la situation à risque selon le deuxième mode comprend un déclenchement ultérieur d'au moins une action du véhicule automobile sans intervention du conducteur, à un instant déterminé défini par des lois de commande prédéterminées.

Dans un mode de réalisation, l'au moins une action sans intervention du conducteur est un actionnement d'un système de freinage autonome du véhicule automobile et/ ou un actionnement d'un système de maintien du véhicule automobile dans sa voie de circulation.

Dans un mode de réalisation, l'au moins un capteur d'images fait partie d'un système de surveillance d'un conducteur.

L'invention porte en outre sur un dispositif d'aide à la conduite d'un véhicule automobile équipé de
- au moins un capteur d'images disposé dans un habitacle du véhicule automobile,
- un moyen d'alerte d'un conducteur du véhicule automobile,
- un module de construction d'une représentation d'un environnement de circulation du véhicule automobile, et
- au moins une unité de calcul configurée pour mettre en œuvre le procédé d'aide à la conduite selon l'invention,
le dispositif comprenant des éléments matériels et/ou logiciels conçus pour mettre en œuvre le procédé selon l'invention.

L'invention porte aussi sur un produit programme d'ordinateur comprenant des instructions de code de programme enregistrées sur un support lisible par ordinateur pour mettre en œuvre le procédé selon l'invention lorsque ledit programme fonctionne sur un ordinateur, notamment pour mettre en œuvre les étapes du procédé selon l'invention lorsque ledit programme fonctionne sur un ordinateur.

L'invention porte également sur un véhicule automobile comprenant un dispositif d'aide à la conduite selon l'invention.

Le dessin annexé représente, à titre d'exemple, un mode de réalisation d'un dispositif d'aide à la conduite selon l'invention et un mode d'exécution d'un procédé d'aide à la conduite selon l'invention.
La [Fig.1] représente un véhicule automobile équipé d'un dispositif d'aide à la conduite selon l'invention.
La [Fig.2] est un premier ordinogramme d'un procédé d'aide à la conduite selon l'invention.
La [Fig.3] illustre une première situation à risque de collision.
La [Fig.4] illustre une deuxième situation à risque de collision.
La [Fig.5] illustre une troisième situation à risque de collision.
La [Fig.6] est un deuxième ordinogramme d'un procédé d'aide à la conduite selon l'invention.

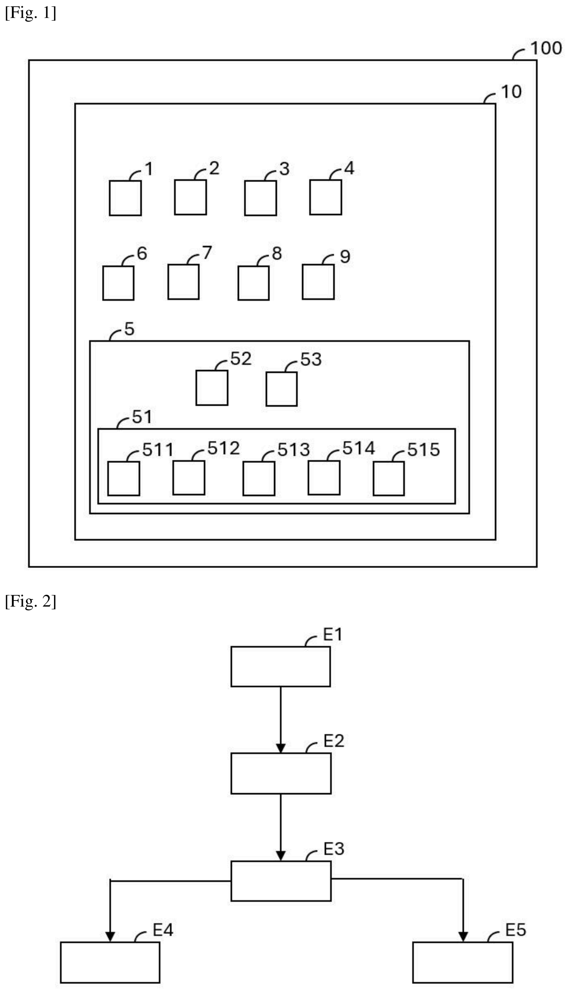

Un exemple d'un véhicule automobile 100 équipé d'un mode de réalisation d'un dispositif 10 d'aide à la conduite selon l'invention est décrit ci-après en référence à la [Fig.1].

Le véhicule automobile 100 peut être un véhicule de tout type, par exemple un véhicule de tourisme ou un véhicule utilitaire, ou un véhicule de transport en commun, ou encore un poids lourd.

Le dispositif 10 comprend principalement :
- un habitacle 1 définissant l'espace intérieur du véhicule automobile 100,
- un capteur d'images 2 et un moyen d'alerte 3 d'un conducteur, le capteur d'images 2 et le moyen d'alerte 3 étant disposés dans un habitacle définissant un espace intérieur du véhicule automobile 100,
- un module de construction 4 d'une représentation d'un environnement de circulation du véhicule automobile,
- une unité de calcul 5 permettant d'exécuter le procédé selon l'invention.

Dans le mode de réalisation présenté, le capteur d'images 2 est réalisé par une ou plusieurs caméras standards. D'autres modes de réalisation du capteur d'images sont envisageables, notamment le capteur d'images peut comprendre une ou plusieurs caméra infra-rouge. Dans la suite du document, les termes « caméra », « au moins une caméra » sont utilisés pour désigner un ou plusieurs capteur d'images. La caméra 2 est avantageusement orientée vers le visage d'un conducteur du véhicule. La caméra 2 est avantageusement équipée d'un algorithme apte à détecter des comportements du conducteur, notamment des signes de fatigue du conducteur (bâillements, frottement des yeux, ...). L'algorithme permet en outre de détecter automatiquement une orientation des yeux et de la tête du conducteur.

Dans un mode de réalisation, le capteur d'images 2 fait partie d'un système de surveillance d'un conducteur (également nommé DMS en référence à l'acronyme « Driving Monitoring System ») équipant le véhicule automobile 100.

Le véhicule automobile est en outre équipé d'un module 4 de construction d'une représentation d'un environnement de circulation du véhicule automobile. Le module 4 de construction utilise des données issues d'une pluralité de capteurs aptes à enregistrer des données représentatives d'un environnement extérieur courant du véhicule automobile. Les capteurs peuvent comprendre un ou plusieurs radars et/ou au moins un lidar et/ou une ou plusieurs caméras.

Plusieurs modes de réalisation d'un moyen d'alerte 3 d'un conducteur du véhicule automobile sont envisageables, par exemple une alerte sonore et/ou une alerte visuelle se produisant dans l'habitacle. L'alerte sonore peut comprendre plusieurs niveaux d'émission sonore. De même l'alerte visuelle peut comprendre plusieurs niveaux de luminosité ou de fréquence de clignotement ou de fréquence de vibration haptique.

Dans un mode de réalisation, l'au moins un dispositif 10 d'aide à la conduite peut comprendre un système d'alerte de collision 6. Un tel système avertit le conducteur d'un risque de collision imminente du véhicule automobile 100 avec un autre véhicule ou un obstacle situé à l'avant ou sur le côté du véhicule automobile 100, le risque pouvant porter sur une collision frontale et/ou une collision latérale.

En complément ou alternativement, l'au moins un dispositif 10 d'aide à la conduite peut comprendre un système d'avertissement d'angle mort 7. Un tel système signale au conducteur la présence d'un véhicule dans un angle mort du véhicule automobile 100 lors d'un changement de voie.

En complément ou alternativement, l'au moins un dispositif 10 d'aide à la conduite peut comprendre un système de freinage d'urgence autonome 8. Un tel système active automatiquement les freins du véhicule automobile 100 pour éviter ou atténuer une collision entre le véhicule automobile 100 et un obstacle détecté à l'avant du véhicule automobile 100.

En complément ou alternativement, l'au moins un dispositif 10 d'aide à la conduite peut comprendre un système d'assistance au maintien d'urgence 9 du véhicule automobile 100 dans sa voie de circulation.

L'unité de calcul 5 comprend un microprocesseur 51, une mémoire électronique locale 52 et des interfaces de communication 53 permettant au microprocesseur 51 de communiquer avec le capteur d'images, le moyen d'alerte, et le module de construction d'une représentation d'un environnement de circulation du véhicule. Dans un mode de réalisation, le microprocesseur 51 permet d'exécuter un logiciel comprenant les modules suivants, qui collaborent entre eux :
- un module 511 de détection d'une situation à risque de collision, qui collabore avec le module de construction d'une représentation d'un environnement de circulation du véhicule automobile,
- un module 512 de capture d'une succession d'images du conducteur, qui collabore avec le capteur d'images, et la mémoire électronique locale 52,
- un module 513 d'analyse d'une adaptation du comportement du conducteur à la situation à risque collision, qui collabore avec la mémoire électronique locale 52,
- un module 514 de gestion de la situation à risque de collision selon un premier mode, qui collabore avec le moyen d'alerte du conducteur, et
- un module 515 de gestion de la situation à risque de collision selon un deuxième mode, qui collabore avec le moyen d'alerte du conducteur.

Le véhicule automobile 100, en particulier le dispositif 10 d'aide à la conduite, comprend de préférence tous les éléments matériels et/ou logiciels configurés de sorte à mettre en œuvre le procédé défini dans l'objet de l'invention ou le procédé décrit plus bas.

Un mode d'exécution du procédé d'aide à la conduite est décrit ci-après en référence à la [Fig.2]. Le procédé comprend cinq étapes E1 à E5, les étapes E1 à E3 s'exécutant successivement, et l'étape E3 étant suivie de l'étape E4 ou de l'étape E5.

La première étape E1 comprend des captures, par la caméra 2, d'une succession d'images du conducteur. Dans un mode de réalisation, la première étape E1 comprend une détection d'une orientation des yeux et de la tête du conducteur. La première étape E1 se déroule avantageusement pendant toute la durée d'une mission effectuée par le conducteur à bord du véhicule automobile 100.

La deuxième étape E2 comprend une réception, à un premier instant, d'une représentation de l'environnement de circulation du véhicule déterminée par le module de construction 4. L'environnement de circulation est ensuite analysé, notamment pour évaluer des conditions de mise en œuvre d'un procédé d'aide à la conduite.

Dans la deuxième étape E2, on détecte, à un premier instant, une situation à risque de collision dans une zone donnée de l'environnement, à partir de la représentation de l'environnement de circulation du véhicule déterminée par le module de construction 4. En remarque, il s'agit ici de détecter une situation à risque de collision dans une zone donnée de l'environnement du véhicule automobile 100. Une collision est susceptible de se produire ultérieurement, dans une zone plus éloignée que la zone donnée.

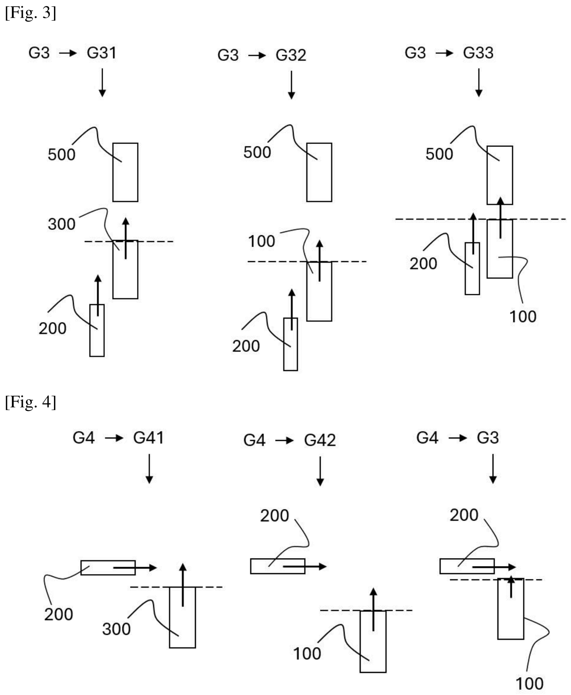

Des exemples de situations à risque de collision sont respectivement illustrés par les figures 3 à 5.

La [Fig.3] illustre une première situation dans laquelle une moto 200 est sur le point de doubler le véhicule automobile 100, 300 alors que le véhicule automobile 100, 300 se rapproche d'un véhicule 500 à l'arrêt situé devant lui sur la même voie de circulation.

La [Fig.4] illustre une deuxième situation, dans laquelle le véhicule automobile 100, 300 se rapproche d'un croisement avec une route sur laquelle circule une moto 200, la moto 200 et le véhicule 100, 300 se rapprochant l'une de l'autre au niveau du croisement.

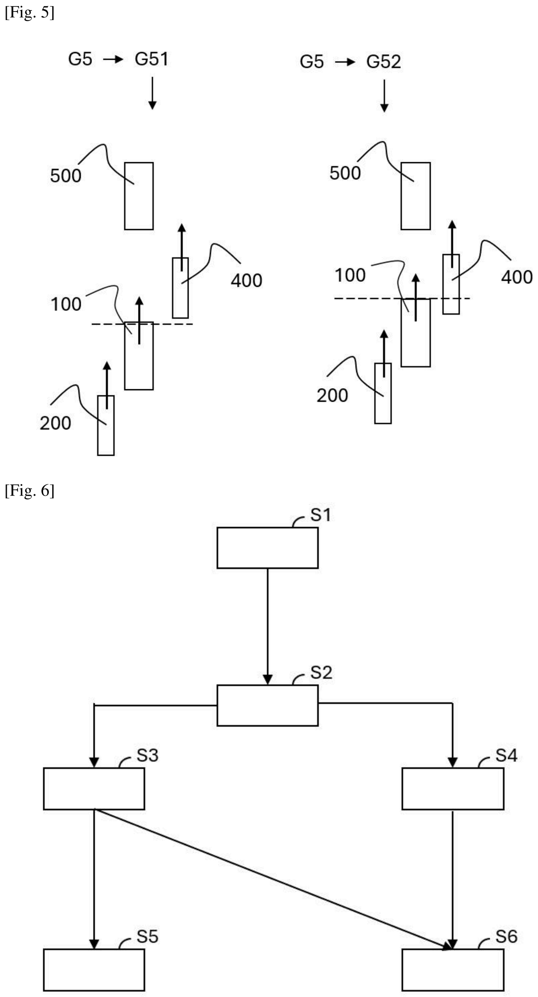

La [Fig.5] illustre une troisième situation, dans laquelle le véhicule automobile 100 se rapproche d'un véhicule 500 à l'arrêt situé devant lui et sur la même voie de circulation, une première moto 200 étant sur le point de le doubler sur sa gauche, et une deuxième moto 400 circulant à droite du véhicule automobile.

Lorsqu'une situation à risque de collision est détectée, on enchaine sur la troisième étape E3 d'analyse d'une adaptation du conducteur à la situation à risque de collision.

La troisième étape E3 d'analyse comprend une analyse d'une succession de directions d'un regard du conducteur capturées par la caméra. En remarque, le terme « direction d'un regard » est utilisé pour désigner une direction d'un axe de visée du regard du conducteur. L'analyse permet d'estimer si un ensemble de regards du conducteur sont dirigés vers la zone donnée. Les regards du conducteur peuvent être dirigés directement ou indirectement vers la zone donnée, notamment par l'intermédiaire d'un rétroviseur. Dans un mode de réalisation, le nombre de regards de l'ensemble doit être supérieur ou égal à 1. Alternativement, le nombre de regards de l'ensemble doit être strictement supérieur à 1, voire strictement supérieur à 2, voire strictement supérieur à 3, voire strictement supérieur à 4.

En outre, dans la troisième étape E3 on peut prendre en compte des actions effectuées par le conducteur, comprenant par exemple un actionnement d'indicateurs de changements de voie (clignotants) et/ou un appui sur une pédale de frein et/ou d'accélérateur et/ou une modification d'un angle volant.

Puis, en fonction des différentes observations d'un comportement du conducteur, on détermine le comportement comme étant adapté ou inadapté à la situation à risque de collision.

Puis, suite à l'étape E3,
- soit le comportement du conducteur est inadapté à la situation à risque de collision, et on enchaine sur l'étape E4 dans laquelle on gère de la situation à risque de collision selon un premier mode comprenant une activation du moyen d'alerte 3 selon un premier niveau de criticité de l'alerte et/ou à un premier instant d'alerte,
- soit le comportement du conducteur est adapté à la situation à risque de collision, et on enchaine sur la cinquième étape E5 de gestion de la situation à risque de collision selon un deuxième mode comprenant activation du moyen d'alerte 3 selon un deuxième niveau de criticité de l'alerte strictement inférieur au premier niveau de criticité de l'alerte et/ou à un deuxième instant d'alerte strictement postérieur au premier instant d'alerte.

De manière générale, le terme « niveau de criticité d'une alerte » désigne un degré d'importance et d'urgence associé à l'alerte. Le niveau de criticité permet de hiérarchiser des alertes notamment en fonction de leur impact potentiel sur la sécurité des passagers du véhicule. Par exemple, un niveau de criticité élevée est associé à un événement susceptible d'affecter la sécurité des occupants du véhicule automobile 100 et/ou d'autres usagers de la route. Un niveau de criticité moyenne peut être associé à une dégradation des performances du véhicule automobile, par exemple un niveau de criticité moyenne peut affecter le bon fonctionnement du véhicule sans danger immédiat. En complément ou alternativement, un niveau de criticité moyenne peut être associé à une situation présentant un danger pour les occupants du véhicule automobile 100 et/ou d'autres usagers de la route, le conducteur ayant déjà détecté la situation et le conducteur ayant déjà commencé à réagir.

Le procédé selon l'invention permet ainsi de déterminer un instant d'émission d'une alerte destinée au conducteur en fonction du comportement du conducteur. En complément ou alternativement, le procédé selon l'invention permet de déterminer un niveau de criticité de l'alerte en fonction du comportement du conducteur.

De ce fait, grâce au procédé selon l'invention,
- lorsque le comportement d'un conducteur n'est pas adapté à la situation à risque de collision, une alerte destinée au conducteur peut être émise de façon précoce, et/ou un niveau de criticité de l'alerte émise peut être élevé, et
- lorsque le comportement du conducteur est adapté à la situation à risque de collision, l'alerte destinée au conducteur peut être retardée de sorte à éviter de créer un « faux positif », c'est-à-dire pour éviter d'émettre une alarme alors que le conducteur est en train de traiter la situation. De plus un niveau de criticité de l'alerte émise peut être abaissé, puisque le conducteur est déjà conscient de la situation de danger.

Dans un mode de réalisation, l'étape E4 de gestion de la situation à risque selon le premier mode comprend en outre un déclenchement immédiat d'au moins une action du véhicule automobile sans intervention du conducteur. De plus, dans un mode de réalisation, l'étape E5 de gestion de la situation à risque selon le deuxième mode comprend, à un instant défini par des lois de commande prédéterminées, un déclenchement l'au moins une action du véhicule automobile sans intervention du conducteur.

Dans un mode de réalisation, l'au moins une action peut être un actionnement du système de freinage autonome 8 du véhicule automobile et/ou un actionnement d'un système de maintien 9 du véhicule automobile dans sa voie de circulation.

Le procédé selon l'invention permet ainsi de déterminer, en fonction du comportement du conducteur, un instant un déclenchement de l'au moins une action du véhicule automobile.

De ce fait, grâce au procédé selon l'invention,
- lorsque le comportement du conducteur n'est pas adapté à la situation à risque de collision, une action du véhicule sans intervention du conducteur peut être déclenchée au premier instant de détection d'une situation à risque de collision, et
- lorsque le comportement du conducteur est adapté à la situation à risque de collision, une action du véhicule sans intervention du conducteur peut être déclenchée à un instant déterminé conformément à la règlementation relative à l'action.

Ainsi, lorsque le comportement du conducteur est adapté à la situation à risque de collision, le déclenchement automatique d'une action de type freinage d'urgence ou maintien du véhicule automobile dans sa voie de circulation peut être retardée (dans des limites fixées par la règlementation et/ou dans des limites fixées par des lois de commande prédéterminées) de sorte à permettre au conducteur de résoudre la situation par lui-même, sans déclenchement de l'action de type freinage d'urgence ou maintien du véhicule automobile dans sa voie de circulation.

La [Fig.3] décrit trois variantes G31, G32, G33 d'un déroulement d'une première situation telle que précédemment évoquée :
- la première variante G31 correspond à un traitement de la situation sans mise en œuvre de l'invention : quels que soient les contrôles visuels réalisés par le conducteur du véhicule automobile 300, le conducteur est alerté à un même premier instant et/ou une même première distance de l'occurrence d'une situation à risque,
- la deuxième variante G32 correspond à un traitement de la situation avec mise en œuvre de l'invention : le conducteur du véhicule automobile 100 est alerté de la présence de la moto 200 de manière anticipée par rapport au premier instant et/ou à la première distance, parce qu'il n'a pas réalisé de contrôles visuels en direction de la moto,
- la troisième variante G33 correspond à un traitement de la situation avec mise en œuvre de l'invention : le conducteur du véhicule automobile 100 est alerté de la présence de la moto 200 de manière retardée par rapport au premier instant et/ou à la première distance, parce qu'il a effectué des contrôles visuels en direction de la moto 200.

La [Fig.4] décrit trois variantes G41, G42, G43 d'un déroulement de la deuxième situation telle que précédemment évoquée :
- la première variante G41 correspond à un traitement de la situation sans mise en œuvre de l'invention : quels que soient les contrôles visuels réalisés par le conducteur du véhicule automobile 300, le conducteur est alerté à un même premier instant et/ou une même première distance de l'occurrence d'une situation à risque,
- la deuxième variante G42 correspond à un traitement de la situation avec mise en œuvre de l'invention : le conducteur du véhicule automobile 100 est alerté de la présence de la moto 200 de manière anticipée par rapport au premier instant et/ou à la première distance, parce qu'il n'a pas réalisé de contrôles visuels en direction de la moto,
- la troisième variante G43 correspond à un traitement de la situation avec mise en œuvre de l'invention : le conducteur du véhicule automobile 100 est alerté de la présence de la moto de manière retardée par rapport au premier instant et/ou à la première distance, parce qu'il a effectué des contrôles visuels en direction de la moto.

La [Fig.5] décrit deux variantes G51, G52 d'un déroulement de la troisième situation telle que précédemment évoquée :
- la première variante G51 correspond à un traitement de la situation avec mise en œuvre de l'invention : le conducteur du véhicule automobile 100 est alerté de la présence de la moto de manière anticipée par rapport au premier instant et/ou à la première distance, parce qu'il n'a pas réalisé de contrôles visuels en direction de la première la moto 200,
- la deuxième variante G52 correspond à un traitement de la situation avec mise en œuvre de l'invention : le conducteur du véhicule automobile 100 est alerté de la présence de la moto 200 de manière retardée par rapport au premier instant et/ou à la première distance, parce qu'il a effectué des contrôles visuels en direction de la moto 200.

La [Fig.6] illustre un deuxième ordinogramme d'un procédé selon l'invention.

Dans une première étape S1, on identifie un risque de collision.

Puis dans une deuxième étape S2, on analyse le comportement du conducteur.

Puis
(i) si le comportement du conducteur n'est pas adapté à la situation de conduite,
   - dans une troisième étape S3 on émet, de manière anticipée, une alerte destinée au conducteur et/ou on augmente la criticité de l'alerte et/ou on augmente le volume de l'alerte, et/ou on augmente le niveau haptique de l'alerte, puis
   - dans une quatrième étape S4 on actionne de manière anticipée un système d'aide à la conduite,
(ii) sinon,
   - dans une cinquième étape S5 on retarde l'émission d'une alerte destinée au conducteur et/ou on réduit la criticité de l'alerte et/ou on réduit le volume de l'alerte, et/ou on réduit le niveau haptique de l'alerte, puis
   - dans une sixième étape S6 on active un système d'aide à la conduite dans le délai règlementaire.

Finalement, lors d'une situation à risque de collision, le procédé selon l'invention permet de limiter les fausses alertes transmises à un conducteur en en tenant compte d'une adaptation du comportement mis en œuvre par le conducteur pour gérer la situation à risque.

Ainsi, le procédé selon l'invention limite le stress ou le coté anxiogène des fausses alertes anticollision, et évite de ce fait une perte de confiance dans les systèmes d'alerte mis en œuvre par le véhicule.

Le procédé permet en outre d'anticiper l'émission d'une alerte lorsque le comportement du conducteur n'est pas adapté au niveau d'urgence de la situation de conduite.

En d'autres termes, le procédé selon l'invention effectue une analyse conjointe de la situation de conduite et de la prise en compte de la situation de conduite par le conducteur. A partir de cette analyse, le procédé selon l'invention permet de déterminer un instant d'émission d'une alerte, un niveau de criticité de l'alerte, et un instant de mise en œuvre d'une action automatique.

Le procédé selon l'invention est ainsi adapté au couple situation/conducteur ce qui permet augmenter un niveau de sécurité du conducteur et la confiance du conducteur dans les alertes émises par le véhicule automobile.

L'invention est par ailleurs peu couteuse à mettre en œuvre. En effet, la surveillance du comportement du conducteur à l'aide d'une caméra disposée dans l'habitacle sera imposée par les nouvelles réglementations notamment en Europe. Dans ce cadre, l'ensemble des capteurs et actionneurs nécessaires à la mise en œuvre de l'invention sont déjà présents dans le véhicule automobile.

## Revendications

1. Procédé d'aide à la conduite d'un véhicule automobile (100),
le véhicule automobile (100) comprenant,
- au moins un capteur d'images (2) disposé dans un habitacle (1) du véhicule automobile (100),
- un module de construction (4) d'une représentation d'un environnement de circulation du véhicule automobile (100),
- un moyen d'alerte (3) d'un conducteur du véhicule automobile (100), et
le procédé étant **caractérisé en ce qu'**il comprend :
- une première étape (E1) de capture, par l'au moins un capteur d'images (2), d'une succession d'images du conducteur,
- une deuxième étape (E2) de détection, à un premier instant, d'une situation à risque de collision dans une zone donnée de l'environnement, à partir d'une représentation de l'environnement de circulation du véhicule automobile (100) déterminée par le module de construction (4), puis
- une troisième étape (E3) de détermination, à partir de la succession d'images, d'une adaptation ou non d'un comportement du conducteur à la situation à risque de collision,
- puis,
(i) en cas d'une inadaptation d'un comportement du conducteur à la situation à risque de collision, une quatrième étape (E4) de gestion de la situation à risque de collision selon un premier mode comprenant une activation du moyen d'alerte (3) selon un premier niveau de criticité d'une alerte et/ou à un premier instant d'alerte, ou
(ii) en cas d'une adaptation d'un comportement du conducteur à la situation à risque de collision, une cinquième étape (E5) de gestion de la situation à risque de collision selon un deuxième mode comprenant une activation du moyen d'alerte (3) selon un deuxième niveau de criticité de l'alerte strictement inférieur au premier niveau de criticité de l'alerte et/ou à un deuxième instant d'alerte strictement postérieur au premier instant d'alerte.

2. Procédé d'aide à la conduite selon la revendication précédente, le véhicule automobile (100) comprenant en outre un système d'alerte de collision frontale (6) et/ou un système d'avertissement d'angle mort (7),
le procédé étant **caractérisé en ce que** la quatrième étape (E4) et/ou la cinquième (E5) étape de gestion de la situation à risque de collision comprennent une mise en œuvre du système d'alerte de collision frontale (6) et/ou une mise en œuvre du système d'avertissement d'angle mort (7).

3. Procédé d'aide à la conduite selon l'une des revendications précédentes, **caractérisé en ce que** la première étape (E1) de capture comprend une détection d'une orientation des yeux et de la tête du conducteur, et **en ce que** la troisième étape (E3) de détermination comprend une analyse d'une succession de directions d'un regard du conducteur capturées par l'au moins un capteur d'images (2), de sorte à estimer si au moins un ensemble de regards du conducteur sont dirigés directement ou indirectement vers la zone donnée, y compris par l'intermédiaire d'un rétroviseur du véhicule automobile (100), le nombre de regards de l'ensemble étant strictement supérieur à 1.

4. Procédé d'aide à la conduite selon la revendication précédente, **caractérisé en ce que** la troisième étape (E3) de détermination comprend une analyse des actions effectuées par un conducteur du véhicule automobile (100), comprenant une utilisation d'indicateurs de changements de voie et/ou un appui sur une pédale de frein ou d'accélérateur du véhicule automobile (100) et/ou une modification d'un angle volant du véhicule automobile (100).

5. Procédé d'aide à la conduite selon l'une des revendications précédentes,
**caractérisé en ce que** la quatrième étape (E4) de gestion de la situation à risque selon le premier mode comprend en outre un déclenchement immédiat d'au moins une action du véhicule automobile (100) sans intervention du conducteur, et/ou
**en ce que** la cinquième étape (E5) de gestion de la situation à risque selon le deuxième mode comprend un déclenchement ultérieur d'au moins une action du véhicule automobile (100) sans intervention du conducteur, à un instant déterminé défini par des lois de commande prédéterminées .

6. Procédé d'aide à la conduite selon la revendication précédente, **caractérisé en ce que** l'au moins une action sans intervention du conducteur est un actionnement d'un système de freinage autonome (8) du véhicule automobile et/ou un actionnement d'un système de maintien du véhicule automobile dans sa voie de circulation (9).

7. Procédé d'aide à la conduite selon l'une des revendications précédentes, **caractérisé en ce que** l'au moins un capteur d'images (2) fait partie d'un système de surveillance d'un conducteur.

8. Dispositif (20) d'aide à la conduite d'un véhicule automobile (100) équipé de
- au moins un capteur d'images (2) disposé dans un habitacle (1) du véhicule automobile (100),
- un moyen d'alerte (3) d'un conducteur du véhicule automobile (100),
- un module de construction (4) d'une représentation d'un environnement de circulation du véhicule automobile (100), et
- au moins une unité de calcul (5) configurée pour mettre en œuvre le procédé d'aide à la conduite selon l'une des revendications précédentes,
le dispositif (20) comprenant des éléments matériels (1, 2, 3, 4, 5, 6, 7, 8, 9, 51, 52, 53) et/ou logiciels conçus pour mettre en œuvre le procédé selon l'une des revendications précédentes.

9. Produit programme d'ordinateur comprenant des instructions de code de programme enregistrées sur un support lisible par ordinateur pour mettre en œuvre le procédé selon l'une quelconque des revendications 1 à 7 lorsque ledit programme fonctionne sur un ordinateur, notamment pour mettre en œuvre la deuxième étape (E2), la troisième étape (E3), la quatrième étape (E4) et la cinquième étape (E5) du procédé selon l'une quelconque des revendications 1 à 7 lorsque ledit programme fonctionne sur un ordinateur.

10. Véhicule automobile comprenant un dispositif (20) d'aide à la conduite selon la revendication 8.
